(19) Europäisches Patentamt

European Patent Office

Office européen des brevets

(11) **EP 0 653 647 B1**

(12) **EUROPEAN PATENT SPECIFICATION**

(45) Date of publication and mention
of the grant of the patent:
**15.10.2003  Bulletin 2003/42**

(51) Int Cl.[7]: **G01V 3/26**

(21) Application number: **94308508.4**

(22) Date of filing: **17.11.1994**

(54) **Method of correcting for axial and transverse error components in magnometer readings during wellbore survey operations**

Verfahren zur Korrektur von axialen und transversalen Fehlerkomponenten in Magnetometermessungen während Bohrlochmessoperationen

Procédé pour corriger des components d'erreur axial et transversal dans les lectures magnétiques pendant les opérations de mesure dans un puits

(84) Designated Contracting States:
**FR GB NL**

(30) Priority: **17.11.1993  US 154200**

(43) Date of publication of application:
**17.05.1995  Bulletin 1995/20**

(73) Proprietor: **BAKER HUGHES INCORPORATED**
**Houston, Texas 77210-4740 (US)**

(72) Inventor: **Brooks, Andrew Goodwin**
**Tomball, Texas 77375 (US)**

(74) Representative: **Cline, Roger Ledlie**
**EDWARD EVANS BARKER**
**Clifford's Inn,**
**Fetter Lane**
**London EC4A 1BZ (GB)**

(56) References cited:
**EP-A- 0 384 537**        **EP-A- 0 387 991**
**WO-A-92/10642**         **GB-A- 2 138 141**
**US-A- 4 682 421**

Printed by Jouve, 75001 PARIS (FR)

**Description**

The present invention relates in general to survey operations in an oil and gas wellbore, and in particular relates to techniques for compensating for biased magnetometer measurements in the determination of azimuth.

In order to understand the present invention, it is important to establish the definitions of terminology utilized in wellbore survey operations. Surveys are used to determine the position of a wellbore within the earth. The orientation of the wellbore is determined at a particular depth by the deviation of the wellbore from a predetermined axis. The deviations may be measured with respect to two reference vectors:

(1) the earth's gravitational field vector "G"; and
(2) the earth's magnetic field vector "B".

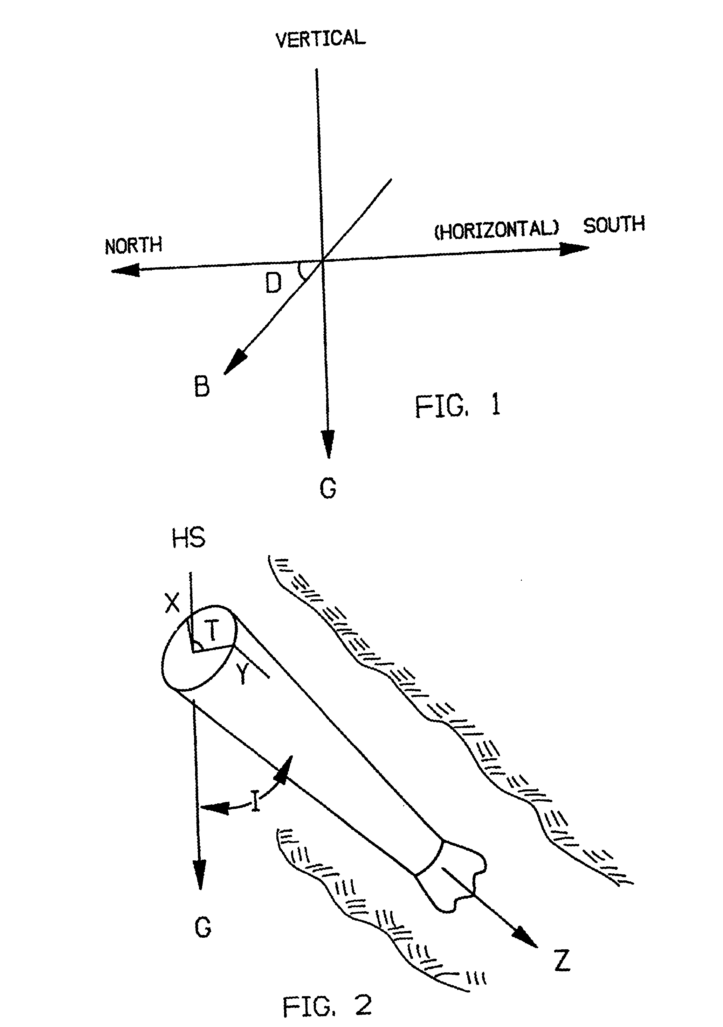

In accordance with this convention, G is positive in the vertical downward direction, while B is positive in the north direction and is inclined by a dip angle D below the horizon, as is shown in **Figure 1**.

The position of the wellbore relative to the earth's gravitational field vector G, is identified as an inclination "I" angle, which is the angle between the longitudinal axis of the drillstring and the earth's gravitational field vector G. The position of the wellbore relative to the earth's magnetic field vector B and the earth's gravitational field G is identified as a magnetic azimuth "A", which is the angle between the horizontal component of the longitudinal axis of the drillstring and the horizontal component of the earth's magnetic field vector B.

Wellbore survey operations are also frequently utilized to determine the dip angle "D", which is the complement of the angle between the earth's magnetic field vector B and the earth's gravitational field vector G (that is, 90 degrees less the angle between vectors B and G). The dip angle D is available in look-up tables, computer programs, and charts for all latitudes and longitudes on the earth's surface.

In conventional wellbore survey operations, accelerometers are utilized to measure the direction of the earth's gravitational field vector G, and magnetometers are utilized to measure the earth's magnetic field vector B. Each vector, includes x-axis, y-axis, and z-axis components.

In order to understand the techniques of the present invention for compensating for the magnetic field biasing error "e", it is important first to understand the coordinate systems utilized in surveying operations. **Figure 2** provides a view of the Cartesian coordinate system which is established relative to the bottomhole assembly of a drillstring. The z-axis of the coordinate system is in alignment with longitudinal axis of the bottom hole assembly. The x-axis and y-axis are perpendicular to the z-axis, and are fixed In position with respect to the bottom hole assembly. Therefore, rotation of the bottomhole assembly about the z-axis also rotates the x-axis and the y-axis by an amount measured in terms of tool face angle "T". Note that the inclination angle I provides a measure of the position of the bottomhole assembly of a drillstring relative to the gravity field vector G, and the tool face angle T provides a measure of the angle in the xy-plane between the y-axis and the highside HS of the tool.

During survey operations, magnetometer readings are taken along the three axes to determine the magnetic field vector B components: these measurements are identified as $B_x$, $B_y$, and $B_z$. Accelerometer readings are taken along the three axes to determine the gravitational field vector G components: these measurements are identified as $G_x$, $G_y$, and $G_z$. Since these vectors have both a direction and a magnitude, these tri-axial measurements will have to be scaled, or calibrated, to accurately reflect the magnitude of the vector they represent.

Survey tools utilizes these x-y-z arrays of accelerometers and magnetometers to determine the directions and magnitudes of the B and G vectors in the x-y-z frame of reference. This information is used to determine the tool's "attitude", expressed by the inclination angle I, and the azimuth angle A and the tool face angle T.

Once a set of values for $B_x$, $B_y$, $B_z$, $G_x$, $G_y$, and $G_z$ are determined for a specific wellbore depth, the azimuth A, inclination I, and tool face angle T of the wellbore at that depth can be determined. Also, the value of the magnetic dip angle D can be calculated. An expected magnetic dip angle $\underline{D}$ can be looked up in reference tables, computer programs, or charts based on the wellsite's longitude and latitude. The three accelerometers are normally used to find I, T and G, the magnetometers are used to find B, and a combination of measurements from all sensors are required to calculate A and D.

Once the azimuth A and inclination I are determined for the wellbore at a number of specific depths, a directional map of the wellbore can be plotted. This directional map shows how far, and in what direction, the wellbore is deviated from the vertical and magnetic north, and ultimately where the well is bottomed.

In order to provide the greatest accuracy in magnetic field measurements, the wellbore surveying tool is typically housed in a non-magnetic subassembly. Additionally, surrounding subassemblies may also be constructed of a non-magnetic material. However, the drillstring, including these non-magnetic subassemblies, can nonetheless become magnetized during drilling operations, to such an extent that the accuracy of the magnetic field measurements is severely impaired. Any magnetization of the bottomhole assembly in the vicinity of the surveying equipment will introduce a biasing error "e", which is an undesired error component contained in magnetometer readings due to the magnetization of the drillstring. The biasing error includes the following two types of error components:

(1) an axial biasing error $e_z$; and
(2) a transverse (or "cross-axial") biasing error $e_{xy}$.

Since the biasing error $e_z$ and $e_{xy}$ arise from sources fixed to the subassembly which carries the sensor array, the transverse biasing error $e_{xy}$ is fixed in position relative to the x-y-z frame of reference and will rotate as the tool is rotated. In other words, the transverse biasing error $e_{xy}$ will remain invariant as the tool is rotated.

In the prior art, there are a plurality of methods for determining wellbore azimuth A which eliminate or minimize the influence of magnetic field biasing errors, including axial biasing errors $e_z$, and transverse biasing errors $e_{xy}$, but most of the prior art solutions are directed to the minimization or elimination of the axial biasing error $e_z$. Only the approach of U.S. Patent No. 4,682,421 to *van Dongen* and U.S. Patent No. 4,345,454 to *Coles* are directed to the minimization or elimination of both the axial biasing error $e_z$ and the transverse biasing error $e_{xy}$.

Most of the prior art approaches require either (1) the adoption of an assumption about the value of one component of the earth's magnetic field such as magnetic field strength B, dip angle D, the horizontal component of the magnetic field $B_h$ or the vertical component of the magnetic field $B_v$, or (2) the adoption of and assumption about the value of two components of the earth's magnetic field in combination with an initial estimation of azimuth which is improved through iterative calculations performed upon survey data, with the goal of converging upon a correct solution. These iterative approaches require additional processing resources, slow down the determination of wellbore orientation parameters such as azimuth A, and are subject to convergence to an incorrect or inadequate conclusion. All of the iterative processes require a good initial estimate in order to provide good survey data.

The invention is defined in claim 1, and a variety of different embodiments in the dependent claims.

In one embodiment, a sensor array is located within a drillstring which is disposed within the wellbore. During pauses in the drilling operations, the sensor array is utilized to measure the x-axis, y-axis, and z-axis components of both the earth's magnetic and gravitational fields at a particular depth in the wellbore, and at a particular tool face orientation. The drillstring is angularly displaced to at least one other tool face orientation, and additional measurements of the x-axis, y-axis, and z-axis components of the earth's magnetic and gravitational fields are made again with the sensor array at that particular tool face orientation. Then, the various measurements of the magnetic and gravitational fields are utilized to calculate directly, algebraically, and non-iteratively at least one wellbore orientation indicator, such as magnetic azimuth A, which establishes a wellbore's position relative to the earth's magnetic field, in a manner which eliminates the influence of the magnetic field biasing errors, including the axial magnetic field biasing error $e_z$, and the transverse magnetic field biasing error $e_{xy}$.

In accordance with the preferred embodiment of the present invention, the influence of the transverse magnetic field biasing error $e_{xy}$ is eliminated by calculating, for each particular depth, at least one intermediate variable which is dependent upon at least a portion of the measurements of the magnetic and gravitational fields, but which is independent of at least one component (in particular, the transverse component) of the magnetic field biasing error. In the preferred embodiment, these intermediate variables comprise $B_{xy}$, which is the x-y plane component of the magnetic field, and ø, which is defined as the difference between the magnetic tool face angle M and the tool face angle T; this is identical to the angle in the xy-plane between magnetic north N and the highside HS of the tool. In accordance with the preferred embodiment of the present invention, a statistical error-minimizing operation, such as a method-of-least-squares estimation, is performed upon the survey data to fit data from two or more surveys to the criteria that $e_x$, $e_y$, $B_{xy}$, and $\phi$ should remain invariant during rotation. The results of this method-of-least-squares estimation are utilized to directly and algebraically calculate the intermediate variables and at least one wellbore orientation indicator (such as azimuth A) which is uninfluenced by the transverse component of the magnetic field biasing error. The values of the transverse biases $e_x$, $e_y$ can also be determined.

In accordance with the preferred embodiment of the present invention, calculations are performed to calculate directly, algebraically, and noniteratively wellbore orientation indicators, which establish wellbore position relative to the earth's magnetic field, such as azimuth A, which are free of the axial magnetic field biasing error $e_z$. In accordance with this technique, the sensor array is utilized to measure the earth's magnetic and gravitational fields at a particular depth and at a particular tool face orientation, or at a particular depth and a plurality of tool face orientations. The measurements of the magnetic and gravitational fields are utilized to calculate directly, algebraically, and noniteratively at least one wellbore orientation indicator, which establishes wellbore position relative to the earth's magnetic field, which is free of the axial component $e_z$ of the magnetic field biasing error. Preferably, the calculations include a comparison of the measurements of the magnetic field with expected values for the magnetic field, in a manner which optimizes the accuracy of a calculated value for the at least one wellbore orientation indicator. More specifically, the measurements of the earth's magnetic field vector magnitude and the dip angle are compared to expected values for the magnetic field vector magnitude and dip angle (or to the values of the expected horizontal component $\underline{B}_h$, and expected vertical component $\underline{B}_v$ of the earth's magnetic field) in a manner which optimizes accuracy. Preferably, a noniterative method of radicals is employed to obtain two or four real roots which satisfy a particular equation. The root which minimizes the difference between the actual magnetic field values and expected magnetic field values is assumed to be the correct value, and is utilized for calculating the at least one wellbore orientation indicator.

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:

**Figure 1** is a simplified graphical depiction of the earth's field vectors;

**Figure 2** provides a view of the Cartesian coordinate system which is established with reference to the longitudinal axis of a drillstring disposed within a wellbore;

**Figure 3** provides a graphical view of the azimuth, inclination, and tool face angles relative to the coordinate system;

**Figures 4a** and **4b** provide a graphical depiction of the impact of an axial magnetic biasing error component ($e_z$) upon the measurement and calculation of wellbore azimuth;

**Figure 5** is a graph which is utilized to describe the technique of the present invention for calculating wellbore orientation indicators which are independent of a transverse magnetic field biasing error; and

**Figure 6** is a graphical depiction of a minimization criterion which is employed to calculate wellbore orientation indicators which are independent of any axial magnetic field biasing error component.

**Figure 7** shows an example of surveying drilling operations.

**Figure 8** shows a data processing system suitably programmed.

**Figure 9** shows a high level flowchart representing the operating steps.

**Figures 10, 11** are flowcharts showing alternative techniques for deriving substantially error free orientation indicators.

The present invention relates to the directional surveying of boreholes using arrays of magnetometers and accelerometers. The surveying tool measures three orthogonal components of the earth's gravity field G and its magnetic field B. G is positive in the vertical downward direction, while B is positive in the north direction and is inclined by a dip angle D below the horizon. These field vectors are illustrated in **Figure 1**.

The three measured components of each field are subscripted x, y, and z. The z-direction is parallel to the longitudinal axis of the drilling tool, pointing toward the drill bit and assumed to be approximately tangent to the borehole. The x- and y-directions are perpendicular to each other and to the z-direction, forming a right-handed triad, the y-direction being aligned with a scribe mark on the survey tool. These tool coordinate axes are shown in **Figure 2**.

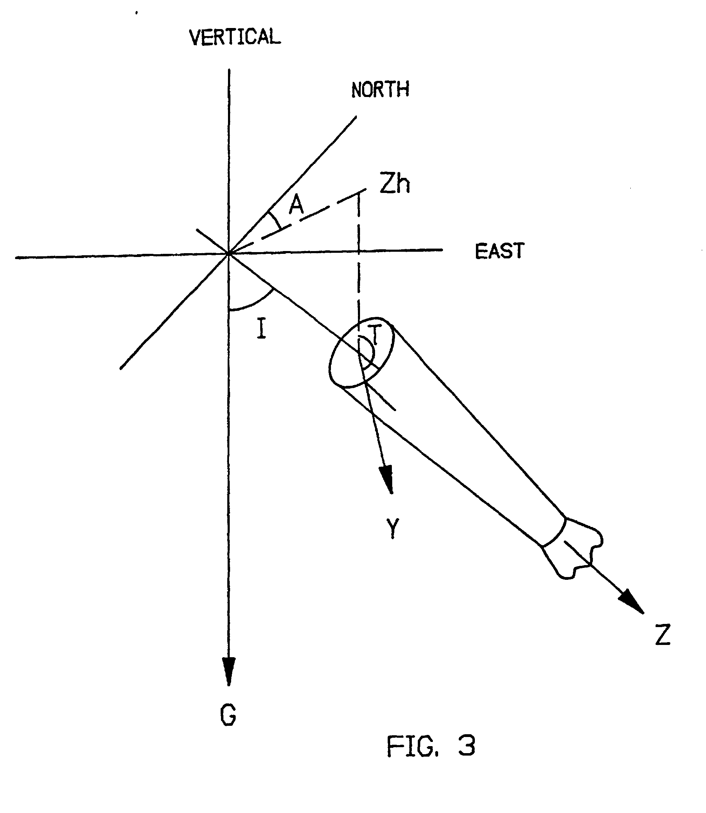

The tool orientation is usually expressed in terms of the following three drilling angles: inclination I which is the angle between the z-direction and vertical; azimuth A which is the angle between the horizontal projections of the z-axis and the magnetic north vector; and gravity tool face T which is the angle in the xy-plane between the high side HS of the tool and the y-axis. Figure 3 shows these drilling angles. A further drilling angle is the magnetic tool face angle M, defined here as the angle in the xy-plane between magnetic north N and the y-axis. It is instructive to note here that the difference $\phi$ between angle M and angle T is the angle in the xy-plane between magnetic north N and high side HS, which must remain invariant as the tool is rotated about its z-axis.

The components measured by the tool may be expressed as:

$$(1) \qquad G_x = G \cdot \sin I \cdot \sin T$$

$$(2) \qquad G_y = G \cdot \sin I \cdot \cos T$$

$$(3) \qquad G_z = G \cdot \cos I$$

**4**

$$(4) \qquad B_x = B{\cdot}cosD{\cdot}cosI{\cdot}cosA{\cdot}sinT - B{\cdot}sinD{\cdot}sinI{\cdot}sinT + B{\cdot}cosD{\cdot}sinA{\cdot}cosT$$

$$(5) \qquad B_y = B{\cdot}cosD{\cdot}cosI{\cdot}cosA{\cdot}cosT - B{\cdot}sinD{\cdot}sinI{\cdot}cosT - B{\cdot}cosD{\cdot}sinA{\cdot}sinT$$

$$(6) \qquad B_z = B{\cdot}cosD{\cdot}sinI{\cdot}cosA + B{\cdot}sinD{\cdot}cosI$$

Note that by convention $G_x$ and $G_y$ are defined as positive toward the tool, while the other four measurements are positive away from the tool.

If the measurements are unbiased, the field parameters and drilling angles may be readily determined from the measured components as follows:

$$(7) \qquad G = (G_x{}^2 + G_y{}^2 + G_z{}^2)^{.5}$$

$$(8) \qquad I = cos^{-1}(G_z/G)$$

$$(9) \qquad T = tan^{-1}(G_x/G_y)$$

$$(10) \qquad M = tan^{-1}(B_x/B_y)$$

$$(11) \qquad B = (B_x{}^2 + B_y{}^2 + B_z{}^2)^{.5}$$

$$(12) \qquad D = sin^{-1}[(B_z{\cdot}G_z - B_x{\cdot}G_x - B_y{\cdot}G_y)/(B{\cdot}G)]$$

$$(13) \qquad A = tan^{-1}[\{G{\cdot}({\cdot}B_x{\cdot}G_y - B_y{\cdot}G_x)\}/\{B_z{\cdot}(G_x{}^2 + G_y{}^2) + G_z{\cdot}(B_x{\cdot}G_x + B_y{\cdot}G_y)\}]$$

The following relationships, where $B_{xy} = (B_x{}^2 + B_y{}^2)^{.5}$, and the angle $\phi$ is defined as (M-T), follow from the above and will be useful later:

$$(14) \qquad B_{xy}{\cdot}sin\phi = B_x{\cdot}cosT - B_y{\cdot}sinT = B{\cdot}cosD{\cdot}sinA$$

$$(15) \qquad B_{xy}{\cdot}cos\phi = B_x{\cdot}sinT + B_y{\cdot}cosT = B{\cdot}cosD{\cdot}cosI{\cdot}cosA - B{\cdot}sinD{\cdot}sinI$$

Sensors are housed in a non-magnetic section of drill collars. However, it is possible for local drill collar magnetization to cause significant magnetic anomalies. For example, such magnetization might arise as a result of welding procedures on the drill collar, inadequate demagnetization applied to the collar or its contents, or the presence of magnetic "junk" attached to the outside of the collar. Anomalies of this kind appear as biases on the $B_x$, $B_y$ and $B_z$ measurements, and therefore lead to corrupted computations of M, B, D and A if equations (10) through (13) are applied. This invention therefore discloses a non-iterative method for reducing the influence of biased $B_x$ and $B_y$ readings on the computed value of A.

Beyond the non-magnetic section, the ends of adjacent magnetic drill collar sections may tend to act as magnetic poles, causing an additional magnetic anomaly in a direction approximately parallel to the z-axis. This type of anomaly will therefore appear primarily as a bias on the $B_z$ measurement, and will tend to corrupt the values of B, D, and A computed using equations (11) through (13). This invention therefore further discloses a non-iterative method for computing A without the use of the biased $B_z$ reading.

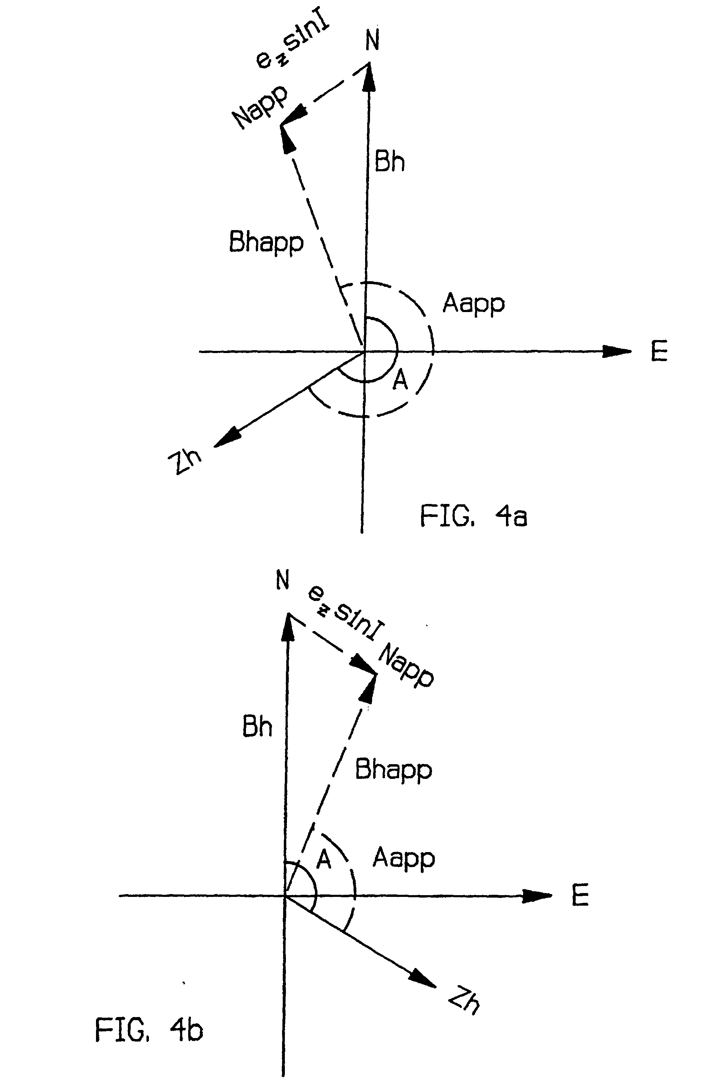

**Figures 4a** and **4b** graphically depict the effects of an axial magnetic field bias "$e_z$" on the determination of azimuth A. In these figures, the horizontal component of the magnetic field is represented by "$B_h$"; the effect of axial bias makes the horizontal component of the magnetic field appear to be in the position of vector $B_{happ}$, which is representative of the "apparent horizontal component of the magnetic field". Azimuth A is defined with respect to the horizontal component of the z-axis $Z_h$. In these figures the apparent azimuth $A_{app}$ is the azimuth value determined from $B_{happ}$, and differs from the unbiased azimuth A. As is shown in **Figures 4a** and **4b**, the effect of the axial error field $e_z$ is usually to increase apparent azimuth $A_{app}$ if the hole has a westward component as is shown in **Figure 4a**, or to decrease apparent azimuth $A_{app}$ if the hole is eastbound, as is shown in **Figure 4b**. In either case, the apparent bottomhole location is moved further north. This is the typical case for boreholes located in the northern hemisphere. When undesired magnetization is present, magnetometer and accelerometer readings provide apparent values for the horizontal component of the magnetic field $B_{happ}$ and azimuth $A_{app}$, but we wish to find the unbiased horizontal component of the magnetic field $B_h$ and especially the unbiased azimuth A.

The invention consists of (1) a method to reduce the influence of transverse magnetometer biases "$e_{xy}$", and (2) a method to compute azimuth A in the presence of axial magnetometer bias "$e_z$". These two techniques will now be described in turn.

### Reduction of transverse magnetometer biases

The effects on computed azimuth of transverse magnetometer biases $e_x$ and $e_y$ may be reduced by taking a number of surveys as the tool is rotated through various tool face attitudes. As suggested by (14) and (15), the transverse magnetometer information is contained in the two parameters $B_{xy}$ and $\phi$, each of which remains invariant during such rotation. This invention uses a least-squares technique to best fit two or more points to the criteria that $e_x$, $e_y$, $B_{xy}$ and $\phi$ should remain invariant during rotation.

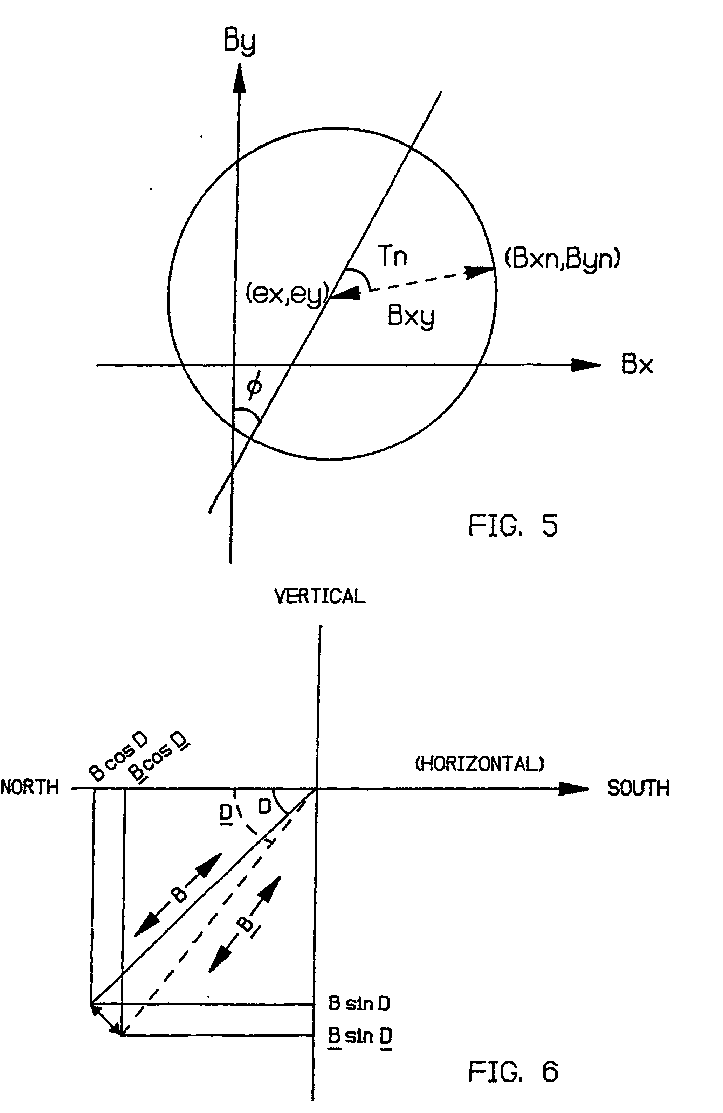

**Figure 5** illustrates typical measured values of $B_x$ and $B_y$ at a number of different tool face attitudes "$T_n$". The points $(B_{xn}, B_{yn})$ represent the $n^{th}$ measurement, which is expected to have coordinates

$$(16) \qquad [e_x + B_{xy} \cdot \sin(T_n + \phi), \; e_y + B_{xy} \cdot \cos(T_n + \phi)]$$

However, its actual coordinates are measured by the tool as $(B_{xn}, B_{yn})$. Any difference is caused by measurement errors other than the systematic biases $e_x$ and $e_y$. The squared distance between the expected and measured coordinates is

$$(17) \qquad D_n^2 = [B_{xn} - e_x - B_{xy} \cdot \sin(T_n + \phi)]^2 + [B_{yn} - e_y - B_{xy} \cdot \cos(T_n + \phi)]^2$$

This invention defines the most likely values of $e_x$, $e_y$, $B_{xy}$, and $\phi$ as those which minimize the sum of these squared distances over all N surveys. Minimization is obtained by setting the appropriate derivatives of equation (17) to zero ($e_x$ for equation (18), $e_y$ for equation (19), $B_{xy}$ for equation (20), and $\phi$ for equation (21)); the results of this minimization are:

$$(18) \qquad e_x = [\Sigma B_x - (b/c) \cdot \Sigma G_x - (a/c) \cdot \Sigma G_y]/N$$

$$(19) \qquad e_y = [\Sigma B_y + (a/c) \cdot \Sigma G_x - (b/c) \cdot \Sigma G_y]/N$$

$$(20) \qquad B_{xy} = [(a^2 + b^2) \cdot (\Sigma G_x^2 + \Sigma G_y^2)/N]^{.5}/c$$

$$(21) \qquad \phi = \tan^{-1}(a/b)$$

$$(22) \qquad \text{where } a = N \cdot \Sigma(B_x G_y) - \Sigma B_x \cdot \Sigma G_y - N \cdot \Sigma(B_y G_x) + \Sigma B_y \cdot \Sigma G_x$$

$$(23) \qquad b = N \cdot \Sigma(B_x G_x) - \Sigma B_x \cdot \Sigma G_x + N \cdot \Sigma(B_y G_y) - \Sigma B_y \cdot \Sigma G_y$$

$$(24) \qquad c = N \cdot \Sigma G_x{}^2 + N \cdot \Sigma G_y{}^2 - \Sigma^2 G_x - \Sigma^2 G_y$$

and "$\Sigma$" represents summation over all surveys.

The values of $B_{xy}$ and $\phi$ obtained from equations (20) and (21) are uncontaminated by the biases $e_x$ and $e_y$. Given a reliable measurement of $B_z$, equations (6), (14) and (15) can now be solved for B, D and A, the result for the azimuth A, magnetic field B, and dip angle D being:

$$(25) \qquad A = \tan^{-1}[B_{xy} \cdot \sin\phi / (B_{xy} \cdot \cos\phi \cdot \cos I + B_z \cdot \sin I)]$$

$$(26) \qquad B = (B_{xy}{}^2 + B_z{}^2)^{0.5}$$

$$(27) \qquad D = \sin^{-1}[(B_z \cdot \cos I - B_{xy} \cdot \cos\phi \cdot \sin I)/B]$$

However, these expressions are of limited value, since experience has shown that the z-axis bias "$e_z$" usually outweighs the transverse biases $e_x$, $e_y$; hence if it is necessary to reduce the influence of $e_x$ and $e_y$ as above, the measurement of $B_z$ in (6) will probably also have been corrupted by an axial bias $e_z$. The second part of this invention therefore discloses a non-iterative method for computing azimuth A without the use of the $B_z$ measurement.

### Computation of A in the presence of axial magnetometer bias

If the $B_z$ measurement is corrupted, equation (6) is not useful in computing the azimuth A. Instead, A can be calculated from (4) and (5), or from (14) and (15), and from the estimated local magnetic field defined by the expected values $\underline{B}$ and $\underline{D}$. The expected values $\underline{B}$ and $\underline{D}$ can be established for a particular latitude and longitude from look up tables, charts or computer programs. The invention disclosed here makes use of both $\underline{B}$ and $\underline{D}$, by minimizing the vector distance between B and its expected value $\underline{B}$. As shown in **Figure 6**, this can be expressed mathematically by adding a third equation

$$(28) \qquad (\underline{B} \cdot \cos\underline{D} - B \cdot \cos D)^2 + (\underline{B} \cdot \sin\underline{D} - B \cdot \sin D)^2 = \text{minimum},$$

and solving the three equations (14), (15), and (28), for the three unknowns B, D and A. This is accomplished by using (14) and (15) to express $B \cdot \sin D$ and $B \cdot \cos D$ in terms of sinA and cosA, then taking the derivative of (28) with respect to A and setting it to zero. This yields the equation

$$(29) \qquad X \cdot \sin A + Y \cdot \cos A + Z \cdot \sin A \cdot \cos A = 0$$

$$(30) \qquad \text{where } X = (B_{xy} \cdot \cos\phi + \underline{B} \cdot \sin\underline{D} \cdot \sin I) \cdot \cos I$$

$$(31) \qquad Y = - B_{xy} \cdot \sin\phi$$

$$(32) \qquad \text{and } Z = \underline{B} \cdot \cos\underline{D} \cdot \sin^2 I$$

A variety of iterative procedures may be employed to solve this type of equation. However, the non-iterative method disclosed here makes use of the substitution $\sin A = (1-\cos 2A)^{.5}$ in (29), to obtain the following fourth-order equation in cosA :

$$(33) \ \cos^4 A + 2 \cdot X/Z \cdot \cos^3 A + (X^2+Y^2-Z^2)/Z^2 \cdot \cos^2 A - 2X/Z \cdot \cos A - X^2/Z^2 = 0$$

[Although equation (33) can be equally well cast in terms of sinA or tanA; the equivalent equations are:

$$\sin^4 A + 2 \cdot Y/Z \cdot \sin^3 A + (X^2 + Y^2 - Z^2)/Z^2 \cdot \sin^2 A - 2 \cdot Y/Z \cdot \sin A - Y^2/Z^2 = 0$$

$$\tan^4 A + 2 \cdot Y/X \cdot \tan^3 A + (X2 + -Y^2 - Z^2)/X^2 \cdot \tan^2 A + 2 \cdot Y/X \cdot \tan A + Y^2/X^2 = 0$$

There may actually be numerical advantages to solving for sinA in many cases, since in the critical east-west orientations | sinA | approaches 1 while cosA approaches zero.]

This equation is solved by the method of radicals, well known in mathematical literature, to obtain either two or four real roots in cosA. The method of radicals is most fully described in the following reference: "College Algebra" by J.B. Rosenbach, E. A. Whitman, B.E. Meserve P.M. Whitman, Fourth Edition, Ginn & Co., 1958, pp. 366-367. For each of the real roots in cosA, sinA is obtained from equation (29), and the root which gives the minimum value of equation (28) is assumed to be the correct one.

This method can also be used to correct for a bias on $B_z$ without first reducing the influence of transverse biases; one need only take a single survey and obtain $B_{xy}$ and $\phi$ from (14) and (15) instead of from (20) and (21). This is equivalent to solving (4), (5) and (28) for the unknowns B, D and A.

After an unbiased azimuth A is computed, magnetic field strength B and dip angle D can be computed as follows:

$$(34) \qquad B = B_{xy} \cdot [(\sin\phi/\sin A)^2 + \{(\sin\phi \cdot \cos I/\tan A - \cos\phi)/\sin I\}^2]^{0.5}$$

$$(35) \qquad D = \sin^{-1}[B_{xy} \cdot (\sin\phi \cdot \cos I/\tan A - \cos\phi)/(B \cdot \sin I)]$$

Preferably, the techniques of the present invention are utilized In conventional wellbore surveying operations. Typically, the sensor array is located within the bottomhole assembly of a drillstring during drilling operations. During pauses in the drilling activity, the sensors are utilized to detect the x-axis, y-axis, and z-axis components of the earth's magnetic and gravitational field vectors, but the z-axis component of the magnetic field is assumed to be corrupted and is thus primarily used as a quality check since $e_z$ should not change rapidly between surveys. These measurements include the influence of the magnetic field biasing error components including the axial magnetic field biasing error component $e_z$ and the transverse magnetic field biasing error component $e_{xy}$. As is conventional, the measurements are transmitted to the earth's surface utilizing measurement-while-drilling data transmission techniques. Typically, the data is impressed upon a mud column as a series of pressure drops or increases which are decoded at the surface to provide numerical data. This data may be entered into a computing device which is preprogrammed in accordance with the method of the present invention. The program will include as inputs the x-axis, y-axis, and z-axis components of the earth's magnetic and gravitational field vectors. The calculations are performed in accordance with the description provided hereabove, and the program provides as an output the wellbore's azimuth A and inclination I which are so useful in defining the position of a wellbore relative to the earth's magnetic and gravitational field vectors.

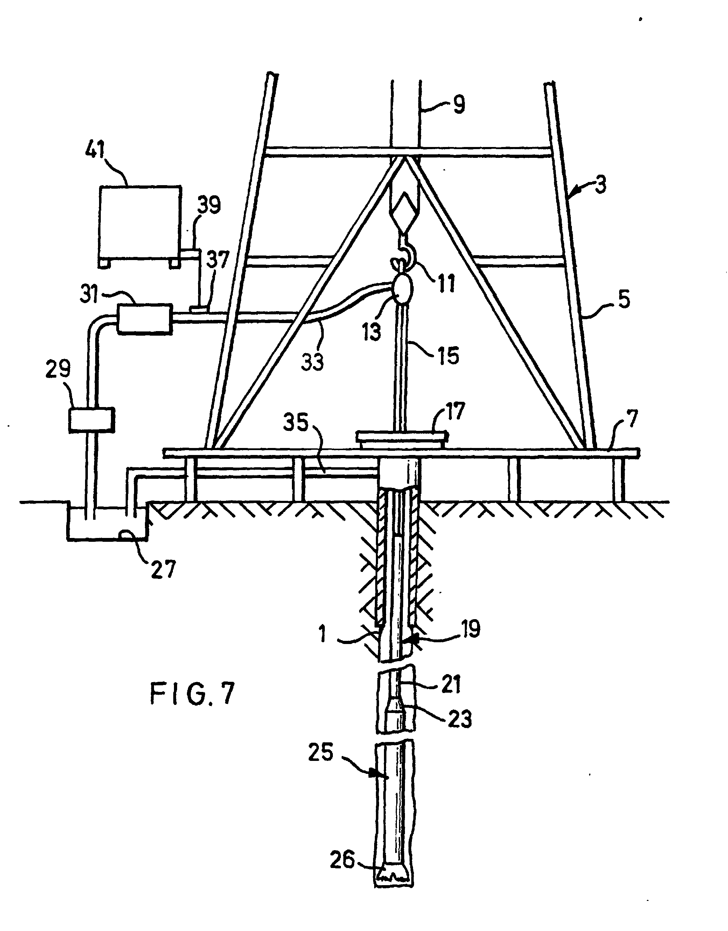

**Figure 7** depicts one example of surveying operations conducted during drilling operations in accordance with the present invention. As is shown, a conventional rig **3** includes a derrick **5**, derrick floor **7**, draw works **9**, hook **11**, swivel **13**, kelly joint **15**, and rotary table **17**. A drillstring **19** which includes drill pipe section **21** and drill collar section **23** extends downward from rig **3** into wellbore **1**. Drill collar section **23** preferably includes a number of tubular drill collar members which connect together, including a measurement-while-drilling logging subassembly and cooperating mud pulse telemetry data transmission subassembly, which are collectively referred to hereinafter as "measurement and communication system **25**".

During drilling operations, drilling fluid is circulated from mud pit **27** through mud pump **29**, through a desurger **31**, and through mud supply line **33** into swivel **13**. The drilling mud flows through the kelly joint and an axial central bore in the drillstring. Eventually, it exits through jets which are located in rock bit **26** which is connected to the lowermost portion of measurement and communication system **25**. The drilling mud flows back up through the annular space between the outer surface of the drillstring and the inner surface of wellbore **1**, to be circulated to the surface where it is returned to mud pit **27** through mud return line **35**. A shaker screen (which is not shown) separates formation cuttings from the drilling mud before it returns to mud pit **27**.

Preferably, measurement and communication system **25** utilizes a mud pulse telemetry technique to communicate data from a downhole location to the surface while drilling operations take place. To receive data at the surface, transducer **37** is provided in communication with mud supply line **33**. This transducer generates electrical signals in response to drilling mud pressure variations. These electrical signals are transmitted by a surface conductor **39** to a surface electronic processing system **41**, which is preferably a data processing system with a central processing unit for executing program instructions, and for responding to user commands entered through either a keyboard or a graphical pointing device.

The mud pulse telemetry system is provided for communicating data to the surface concerning numerous downhole conditions sensed by well logging transducers or measurement systems such as the surveying sensors that are ordinarily located within measurement and communication system **25**. Mud pulses that define the data propagated to the surface are produced by equipment which is located within measurement and communication system **25**. Such equipment typically comprises a pressure pulse generator operating under control of electronics contained in an instrument housing to allow drilling mud to vent through an orifice extending through the drill collar wall. Each time the pressure pulse generator causes such venting, a negative pressure pulse is transmitted to be received by surface transducer **37**. Such a telemetry system is described and explained in U.S. Patent No. 4,216,536 to More, which is incorporated herein by reference as if fully set forth. An alternative conventional arrangement generates and transmits positive pressure pulses. As is conventional, the circulating mud provides a source of energy for a turbine-driven generator subassembly which is located within measurement and communication system **25**. The turbine-driven generator generates electrical power for the pressure pulse generator and for various circuits including those circuits which form the operational components of the measurement-while-drilling tools. As an alternative or supplemental source of electrical power, batteries may be provided, particularly as a back-up for the turbine-driven generator.

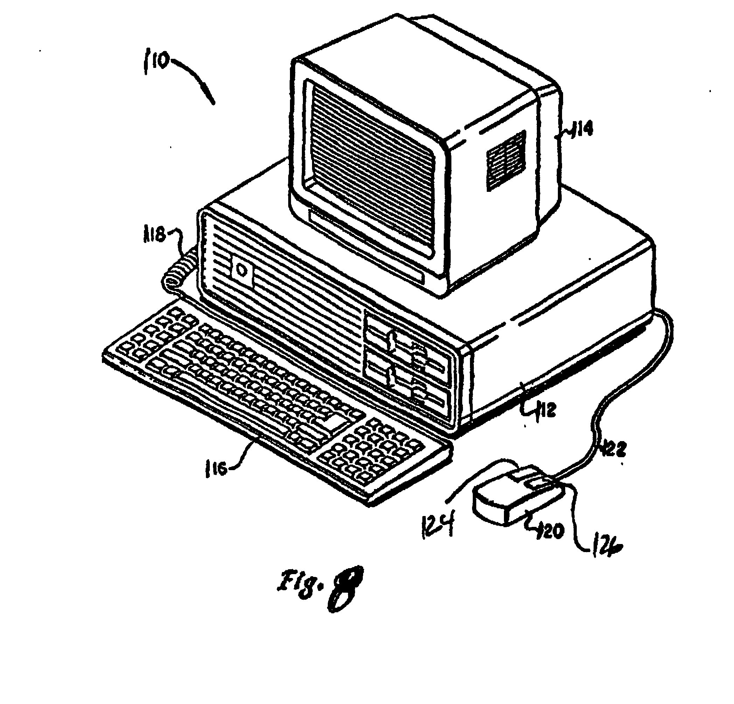

With reference now to the figures and in particular with reference to Figure 8, there is depicted a pictorial representation of data processing system **110** which may be programmed in accordance with the present invention. As may be seen, data processing system **110** includes processor **112** which preferably includes a graphics processor, memory device and central processor (not shown). Coupled to processor **112** is video display **114** which may be implemented utilizing either a color or monochromatic monitor, in a manner well known in the art. Also coupled to processor **112** is keyboard **116**. Keyboard **116** preferably comprises a standard computer keyboard which is coupled to the processor by means of cable **118**.

Also coupled to processor **112** is a graphical pointing device, such as mouse **120**. Mouse **120** is coupled to processor **112**, in a manner well known in the art, via cable **122**. As is shown, mouse **120** may include left button **124**, and right button **126**, each of which may be depressed, or "clicked", to provide command and control signals to data processing system **110**. While the disclosed embodiment of the present invention utilizes a mouse, those skilled in the art will appreciate that any graphical pointing device such as a light pen or touch sensitive screen may be utilized to implement the method end apparatus of the present invention. Upon reference to the foregoing, those skilled in the art will appreciate that data processing system **110** may be implemented utilizing a so-called personal computer, such as the Model 80 PS/2 computer manufactured by International Business Machines Corporation of Armonk, New York, or any other conventional and commercially available data processing system.

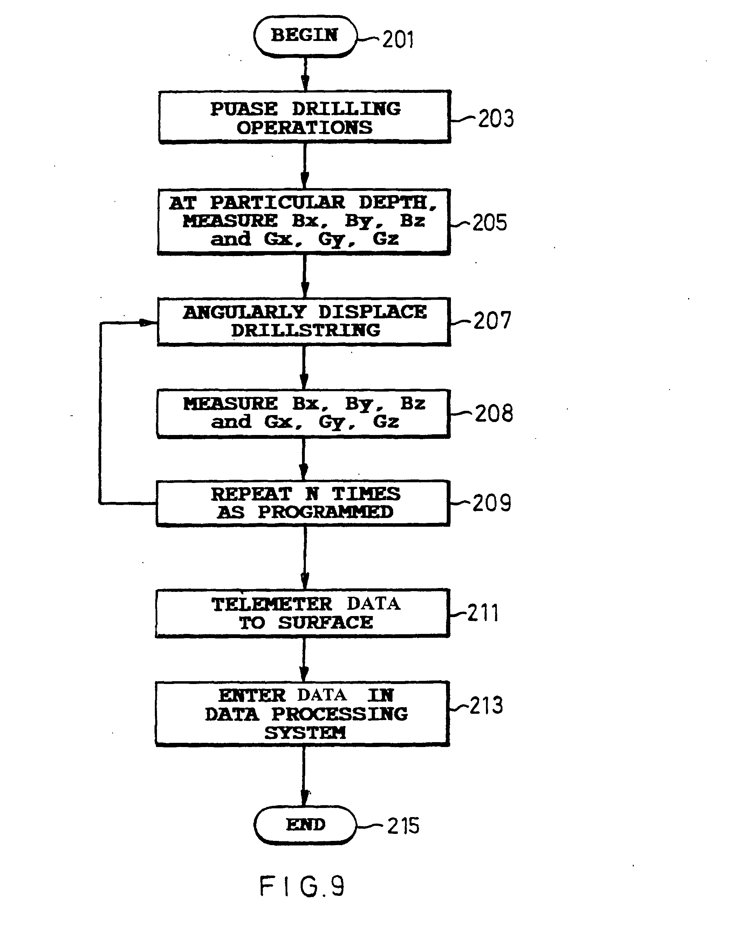

**Figure 9** is a high level flowchart representation of the operating steps of the present invention. The process begins at step **201**. In accordance with step **203**, drilling operations are paused. Next, in accordance with step **205**, at a particular depth, the x-axis, y-axis, and z-axis of the earth's magnetic and gravitational fields are measured utilizing the sensor array. Next, In accordance with step **207**, the drillstring is angularly displaced; then, in accordance with step **208**, the x-axis, y-axis, and z-axis components of the earth's magnetic and gravitational fields are once again measured. In accordance with step **209**, this process is repeated a predetermined number of times as preprogrammed. In other words, the drillstring is rotated to different angular positions and measurements are made of the x-axis, y-axis, and z-axis components of the earth's magnetic and gravitational fields. In accordance with step **211**, the data is telemetered to the surface utilizing a conventional measurement-while-drilling telemetry system. Then, in accordance with step **213**, the data is entered Into a data processing system, where calculations are performed in accordance with the teachings of the present invention. The process ends at step **215**.

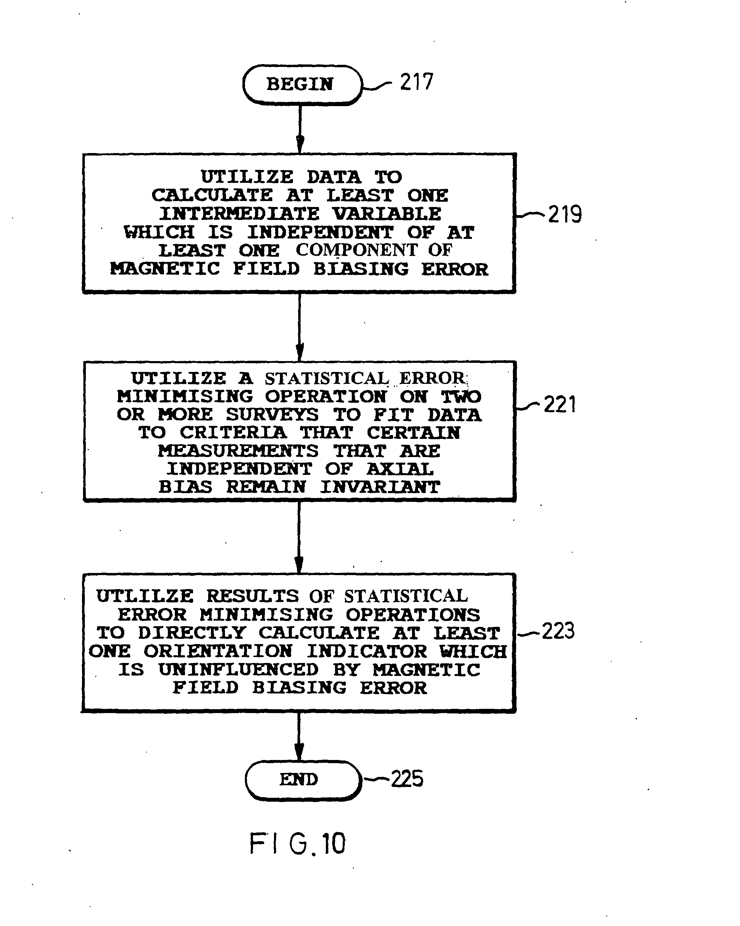

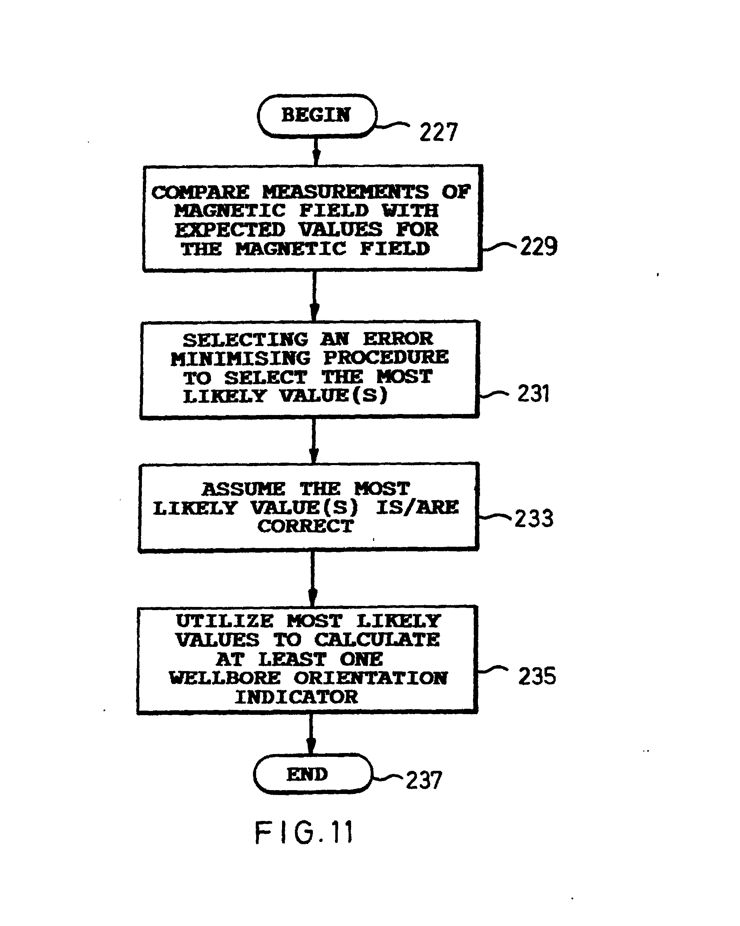

**Figure 10** is a flowchart representation of one technique for deriving substantially error free orientation indicators as is described and claimed herein; **Figure 11** is an alternative technique for deriving substantially error free orientation indicators in accordance with an alternative technique which is described and claimed herein. The techniques of **Figures 10** and **11** may be used either together or alone to generate error free survey measurements.

Turning first to **Figure 10**, the process begins at software block **217**. Next, In accordance with software block **219**, the data which has been entered into the data processing system is utilized to calculate at least one intermediate variable which is independent of at least one component of magnetic field biasing error. Next, in accordance with software block **221**, the data processing system utilizes a statistical error minimizing operation on two or more surveys to fit the data to the criteria that certain measurements that are independent of axial bias remain invariant. Next, in accordance with software block **223**, the data processing system utilizes the results of the statistical error minimizing operation to directly calculate at least one orientation indicator which is uninfluenced by magnetic field blasing error. The process ends at software block **225**.

Turning now to **Figure 11**, the alternative technique will be described with reference to the high-level flowchart. The process begins at software block **227**. It continues at software block **229**, wherein the data processing system is utilized to compare measurements of magnetic field with expected values for the magnetic field. Next, in accordance with software block **231**, the data processing system utilizes an error minimizing procedure to select the most likely value or values. Then, in accordance with software block **233**, the data processing system continues operation based upon the assumption that the most likely value or values generated utilizing the error minimizing procedure is or are the correct value or values. Next, in accordance with software block **235** the data processing utilizes the most likely value or values to calculate at least one wellbore orientation indicator, which is substantially free of biasing error. The process ends at software block **237**.

**Claims**

1. A method of surveying a wellbore utilizing a sensor array located within a drillstring within said wellbore, in the presence of a magnetic field biasing error which can be defined in terms of both an axial magnetic field biasing error ($e_z$) and a transverse magnetic field biasing error ($e_{xy}$), in a manner which reduces said magnetic field biasing error, comprising:

   measuring magnetic and gravitational fields (B, G) with said sensor array at a particular depth and at a particular tool face orientation;

   rotating said drillstring to at least one other tool face orientation and measuring magnetic and gravitational fields with said sensor array at that particular tool face orientation to provide a plurality of N measurements **characterized by**:

   utilizing a noniterative statistical technique to best fit two or more of those N measurements to the criterion that the x-axis component of the biasing error ($e_x$), the y-axis component of the biasing error ($e_y$), the transverse component of the magnetic field vector ($B_{xy}$), and the difference (phi) between the magnetic tool face angle (M) and the tool face angle (T) should remain invariant during rotation of the tool, wherein the most likely values for $e_x$, $e_y$, $B_{xy}$, and phi are those which minimize the squared distance between expected and measured coordinates for all N measurements.

2. A method of surveying according to Claim 1 wherein said noniterative statistical technique comprises a method-of-least-squares technique, and wherein the most likely values for $e_x$, $e_y$, $B_{xy}$, and phi are those which minimize the sum of the squared distances for all N measurements.

3. A method of surveying according to Claim 1, further comprising:

   utilizing the results of said noniterative statistical technique to calculate at least one wellbore orientation indicator such as azimuth (A) which is free of the effects of magnetic field biasing error.

4. A method of surveying according to Claim 1, further comprising:

   identifying a most likely value for wellbore azimuth (A) by utilizing an estimated value for local magnetic field defined by expected values for magnetic field strength (B) and dip angle (D).

5. A method of surveying according to Claim 4, wherein said step of identifying includes:

   utilizing measurements of said magnetic and gravitational fields to calculate directly algebraically, and non-iteratively wellbore azimuth in a manner which minimizes the corrupting influence of axial magnetic field biasing errors, by performing intermediate calculations.

6. A method of surveying according to Claim 4, wherein said step of identifying includes:

   comparing measurements of said magnetic field with expected values for said magnetic field in a manner which minimizes the difference between a calculated value for a magnetic field vector and an expected value for said magnetic field vector, by identifying a most likely value for said at least one wellbore orientation indicator by performing at least one of the following:

   (a) comparing measured magnetic field vector magnitude to expected magnetic field magnitude;

(b) comparing measured dip angle values to expected dip angle values; and

(c) determining a most likely value for said at least one wellbore orientation indicator by identification of minimum variation between measured and expected values.

**Patentansprüche**

1. Verfahren zum Vermessen eines Bohrlochs unter Verwendung einer in einem Bohrgestänge in dem genannten Bohrloch befindlichen Sensoranordnung bei Vorliegen eines Magnetfeldvorspannungsfehlers, der im Sinne eines axialen Magnetfeldvorspannungsfehlers ($e_z$) und eines querverlaufenden Magnetfeldvorspannungsfehlers ($e_{xy}$) auf eine Weise definiert werden kann, die den genannten Magnetfeldvorspannungsfehlers reduziert, umfassend die folgenden Schritte:

   Messen der Magnet- und Gravitationsfelder (B, G) mit der genannten Sensoranordnung in einer bestimmten Tiefe und bei einer bestimmten Werkzeugflächenausrichtung;
   Drehen des genannten Bohrgestänges in wenigstens eine andere Werkzeugflächenausrichtung und Messen der Magnetund Gravitationsfelder mit der genannten Sensoranordnung in dieser Werkzeugflächenausrichtung, um eine Mehrzahl von N Messwerten zu erzeugen, **gekennzeichnet durch**:

   Anwenden einer nichtiterativen statistischen Methode zur besten Anpassung von zwei oder mehr dieser N Messwerte gemäß dem Kriterium, dass die x-Achsen-Komponente des Vorspannungsfehlers ($e_x$), die y-Achsen-Komponente des Vorspannungsfehlers ($e_y$), die Transversalkomponente des Magnetfeldvektors ($B_{xy}$) und die Differenz (phi) zwischen dem magnetwerkzeugflächenwinkel (M) und dem Werkzeugflächenwinkel (T) während der Rotation des Werkzeugs unverändert bleiben soll, wobei die wahrscheinlichsten Werte für $e_x$, $e_y$, $B_{xy}$ und phi diejenigen sind, die den quadrierten Abstand zwischen erwarteten und gemessenen Koordinaten für alle N Messwerte minimieren.

2. Verfahren zum Vermessen nach Anspruch 1, bei dem die genannte nichtiterative statistische Methode eine Methode der kleinsten Quadrate umfasst und bei dem die wahrscheinlichsten Werte für $e_x$, $e_y$, $B_{xy}$ und phi diejenigen sind, die die Summe der quadrierten Abstände für alle N Messwerte minimieren.

3. Vermessungsverfahren nach Anspruch 1, ferner umfassend:

   Anwenden der Ergebnisse der genannten nichtiterativen statischen Methode zum Berechnen von wenigstens einem Bohrlochausrichtungsindikator wie z.B. Azimut (A), der frei von den Effekten des Magnetfeldvorspannungsfehlers ist.

4. Vermessungsverfahren nach Anspruch 1, ferner umfassend:

   Identifizieren eines wahrscheinlichsten Wertes für den Bohrlochazimut (A) mit Hilfe eines Schätzwertes für das örtliche Magnetfeld, das durch erwartete Werte für Magnetfeldstärke (B) und Neigungswinkel (D) definiert wird.

5. Vermessungsverfahren nach Anspruch 4, bei dem der genannte Schritt des Identifizierens Folgendes beinhaltet:

   Verwenden von Messwerten der genannten Magnet- und Gravitationsfelder, um den Bohrlochazimut direkt algebraisch und nichtiterativ auf eine Weise zu berechnen, die den verfälschenden Einfluss von axialen Magnetfeldvorspannungsfehlern durch Ausführen von Zwischenberechnungen minimiert.

6. Vermessungsverfahren nach Anspruch 4, bei dem der genannte Schritt des Identifizierens Folgendes beinhaltet:

   Vergleichen der Messwerte des genannten Magnetfeldes mit erwarteten Werten für das genannte Magnetfeld auf eine Weise, die die Differenz zwischen einem berechneten Wert für einen Magnetfeldvektor und einem erwarteten Wert für den genannten Magnetfeldvektor durch Identifizieren eines wahrscheinlichsten Wertes für den genannten wenigstens einen Bohrlochausrichtungsindikator durch Ausführen von wenigstens einer der folgenden Tätigkeiten minimiert:

(a) Vergleichen der Größe des gemessenen Magnetfeldvektors mit der Größe des erwarteten Magnetfeldes;

(b) Vergleichen der gemessenen Neigungswinkelwerte mit erwarteten Neigungswinkelwerten; und

(c) Ermitteln eines wahrscheinlichsten Wertes für den genannten wenigstens einen Bohrlochausrichtungsindikator durch Identifizieren der kleinsten Variation zwischen gemessenen und erwarteten Werten.

## Revendications

**1.** Une méthode de sonder un alésage mural en utilisant un groupe détecteur implanté dans un foret qui pénètre dans ledit alésage, en présence d'une erreur de polarisation de champ magnétique, et qui peut être définie, premièrement, sous la forme d'une erreur de polarisation de champ magnétique axial ($e_z$) et, deuxièmement, sous la forme d'une erreur de polarisation de champ magnétique transversal ($e_{xy}$), d'une manière qui permet de réduire ladite erreur de polarisation de champ magnétique qui se compose :

de la mesure des champs magnétique et gravitationnel (B, G), à l'aide dudit groupe capteur, à une profondeur spécifique et sous une orientation spécifique de la surface de l'outil

de la rotation dudit foret, sous au moins une autre orientation de surface de l'outil et de la mesure des champs magnétique et gravitationnel avec ledit groupe capteur à cette orientation spécifique de la surface de l'outil, afin d'obtenir toute une série de N mesures **caractérisées par** :

l'utilisation d'une technique statistique non itérative qui permet de faire correspondre au mieux au moins deux de ces N mesures, en fonction des critères selon lesquels la composante de l'axe x de l'erreur de polarisation ($e_x$), la composante de l'axe y de l'erreur de polarisation ($e_y$), la composante transversale du vecteur de champ magnétique ($B_{xy}$), et la différence (phi) entre l'angle de la surface de l'outil magnétique (M) et l'angle de la surface de l'outil (T), doivent rester invariables pendant toute la rotation de l'outil, et dans ce cas là, les valeurs les plus probables de $e_x$, $e_y$, $B_{xy}$ et phi, sont celles qui minimisent le carré de la distance entre les coordonnées attendues et les coordonnées mesurées, et ce pour toutes les N mesures.

**2.** Une méthode de sondage conforme à l'affirmation 1,
dans laquelle ladite technique statistique non itérative fait appel à une technique à méthode des plus petits carrés et où les valeurs les plus probables de $e_x$, $e_y$, $B_{xy}$ et phi, sont celles qui minimisent la somme des carrés de la distance pour toutes les N mesures.

**3.** Une méthode de sondage conforme à l'affirmation 1 et qui comporte en outre :

l'utilisation des résultats de ladite technique statistique non itérative pour calculer au moins un indicateur d'orientation d'alésage comme, par exemple, l'azimut (A), qui est exempt des effets de l'erreur de polarisation du champ magnétique.

**4.** Une méthode de sondage conforme à l'affirmation 1 qui comprend en outre :

l'identification de la valeur la plus probable de l'azimut de l'alésage (A), en utilisant une valeur estimée pour le champ magnétique local défini par des valeurs attendues pour la puissance du champ magnétique (B) et de l'angle d'inclinaison (D).

**5.** Une méthode de sondage conforme à l'affirmation 4,
dans laquelle la phase d'identification passe par :

l'utilisation des mesures desdits champs magnétique et gravitationnel pour calculer directement sous forme algébrique et non itérative l'azimut de l'alésage d'une manière qui minimise l'influence de corruptions provoquées par les erreurs de polarisation de champ magnétique axial, en effectuant des calculs intermédiaires.

**6.** Une méthode de sondage conforme à l'affirmation 4,
dans laquelle ladite opération d'identification porte sur :

la comparaison de mesures dudit champ magnétique à des valeurs attendues pour ledit champ magnétique d'une manière qui minimise la différence entre une valeur calculée pour un vecteur de champ magnétique et une valeur attendue pour ledit vecteur de champ magnétique, en identifiant la valeur la plus probable pour ledit vecteur, pour au moins un indicateur d'orientation d'alésage, en effectuant au moins l'une des activités suivantes :

a) comparaison de l'amplitude du vecteur mesuré de champ magnétique à l'amplitude attendue de champ magnétique

b) comparaison des valeurs mesurées de l'angle d'inclinaison à des valeurs attendues d'angle d'inclinaison

c) détermination de la valeur la plus probable desdits vecteurs, pour au moins un indicateur d'orientation d'alésage, en identifiant la variation minimale entre la valeur mesurée et la valeur attendue.

FIG. 1

FIG. 2

FIG. 3

FIG. 4a

FIG. 4b

FIG. 5

FIG. 6

FIG. 7

Fig. 8

```
        ┌─────────────┐
        │    BEGIN    │──201
        └─────────────┘
               │
               ▼
  ┌───────────────────────┐
  │     PUASE  DRILLING   │──203
  │      OPERATIONS       │
  └───────────────────────┘
               │
               ▼
  ┌───────────────────────┐
  │  AT PARTICULAR DEPTH, │──205
  │   MEASURE  Bx,  By,  Bz│
  │     and Gx,  Gy,  Gz  │
  └───────────────────────┘
               │
               ▼
  ┌───────────────────────┐
  │  ANGULARLY DISPLACE   │──207
  │      DRILLSTRING      │
  └───────────────────────┘
               │
               ▼
  ┌───────────────────────┐
  │   MEASURE Bx,  By,  Bz│──208
  │     and Gx,  Gy,  Gz  │
  └───────────────────────┘
               │
               ▼
  ┌───────────────────────┐
  │    REPEAT N TIMES     │──209
  │     AS PROGRAMMED     │
  └───────────────────────┘
               │
               ▼
  ┌───────────────────────┐
  │    TELEMETER DATA     │──211
  │      TO SURFACE       │
  └───────────────────────┘
               │
               ▼
  ┌───────────────────────┐
  │     ENTER DATA  IN    │──213
  │   DATA PROCESSING     │
  │       SYSTEM          │
  └───────────────────────┘
               │
               ▼
        ┌─────────────┐
        │     END     │──215
        └─────────────┘
```

FIG.9

BEGIN — 217

UTILIZE DATA TO
CALCULATE AT LEAST ONE
INTERMEDIATE VARIABLE
WHICH IS INDEPENDENT OF AT
LEAST ONE COMPONENT OF
MAGNETIC FIELD BIASING ERROR — 219

UTILIZE A STATISTICAL ERROR
MINIMISING OPERATION ON TWO
OR MORE SURVEYS TO FIT DATA
TO CRITERIA THAT CERTAIN
MEASUREMENTS THAT ARE
INDEPENDENT OF AXIAL
BIAS REMAIN INVARIANT — 221

UTLILZE RESULTS OF STATISTICAL
ERROR MINIMISING OPERATIONS
TO DIRECTLY CALCULATE AT LEAST
ONE ORIENTATION INDICATOR WHICH
IS UNINFLUENCED BY MAGNETIC
FIELD BIASING ERROR — 223

END — 225

FIG.10

BEGIN —227

COMPARE MEASUREMENTS OF
MAGNETIC FIELD WITH
EXPECTED VALUES FOR
THE MAGNETIC FIELD —229

SELECTING AN ERROR
MINIMISING PROCEDURE
TO SELECT THE MOST
LIKELY VALUE(S) —231

ASSUME THE MOST
LIKELY VALUE(S) IS/ARE
CORRECT —233

UTILIZE MOST LIKELY
VALUES TO CALCULATE
AT LEAST ONE
WELLBORE ORIENTATION
INDICATOR —235

END —237

FIG.11